# EUROPEAN PATENT APPLICATION

(11) **EP 4 647 213 A1**
(43) Date of publication of application: **12.11.2025**
(21) Application number: 25171255.0
(22) Date of filing: 17.04.2025
(51) Int. Cl.: B25J 9/12, B25J 13/08, B25J 17/00

(54) **ROBOT**

(30) Priority: 19.04.2024 JP 2024068319
(71) Applicant: Kabushiki Kaisha Yaskawa Denki, Kitakyushu-shi, Fukuoka 806-0004 (JP)
(72) Inventor: FUKUDOME, Yoshitaka, Kitakyushu-shi, 806-0004 (JP); KANZAKI, Suguru, Kitakyushu-shi, 806-0004 (JP); I, Minhyon, Kitakyushu-shi, 806-0004 (JP); TSUNODA, Shuhei, Kitakyushu-shi, 806-0004 (JP)
(74) Representative: Viering, Jentschura & Partner mbB Patent- und Rechtsanwälte

(57) **Abstract**

A robot is effective in improving the accuracy of rotation detection by a rotation sensor that directly detects a joint angle. The robot (2) includes a first link and a second link that are coupled to each other through a joint axis (Ax), a rotator (50) that is fixedly attached to the second link and rotates relative to the first link about the joint axis (Ax), a rotation sensor (40) that is held by a holding member (70) and detects rotation of the rotator (50), and the holding member (70) that is fixedly attached to the first link to hold the rotation sensor (40) and holds and allows the rotator (50) to rotate about the joint axis (Ax).

## Description

### [Technical Field]

The present disclosure relates to a robot.

### [Background Art]

Patent Literature (PTL) 1 discloses a robot that includes a motor, a speed reducer that transmits driving force of the motor to a link, and a detector that detects a rotation angle of an output shaft of the speed reducer. The detector is coupled through a shaft coupling to the output shaft of the speed reducer.

### [Citation List]

### [Patent Literature]

PTL 1: Japanese Unexamined Patent Application Publication No. 2012-171072

### [Summary of Invention]

### [Technical Problem]

The present disclosure provides a robot that is effective in improving the accuracy of rotation detection by a rotation sensor that directly detects a joint angle.

### [Solution to Problem]

A robot according to one aspect of the present disclosure includes a first link and a second link that are coupled to each other through a joint axis, a rotator that is fixedly attached to the second link and rotates relative to the first link about the joint axis, a rotation sensor that detects rotation of the rotator, and a holding member that is fixedly attached to the first link to hold the rotation sensor and holds and allows the rotator to rotate about the joint axis.

### [Advantageous Effects of Invention]

According to the present disclosure, it is possible to provide a robot that is effective in improving the accuracy of rotation detection by a rotation sensor that directly detects a joint angle.

### [Brief Description of Drawings]

[FIG. 1]

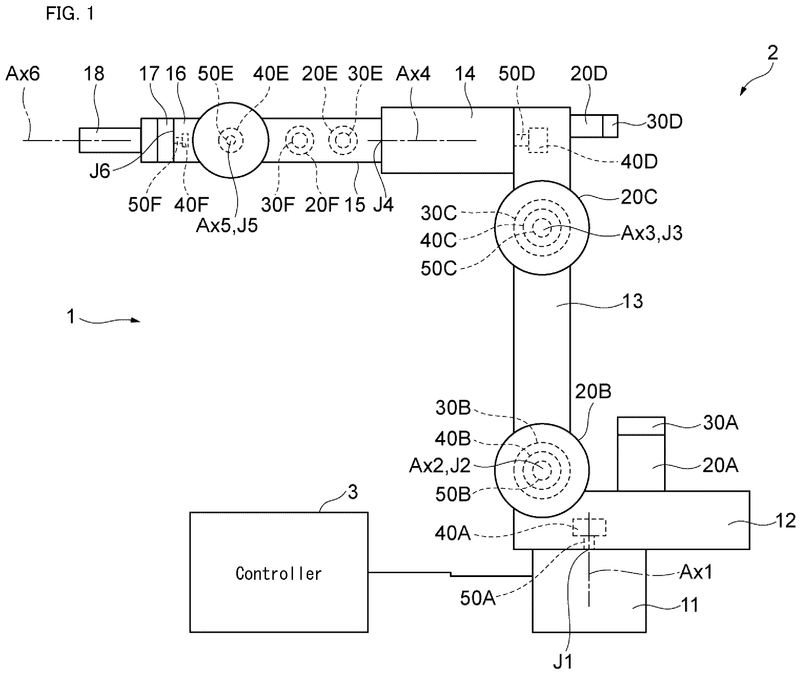

   FIG. 1 is a schematic diagram illustrating a configuration of a robot system.
[FIG. 2]

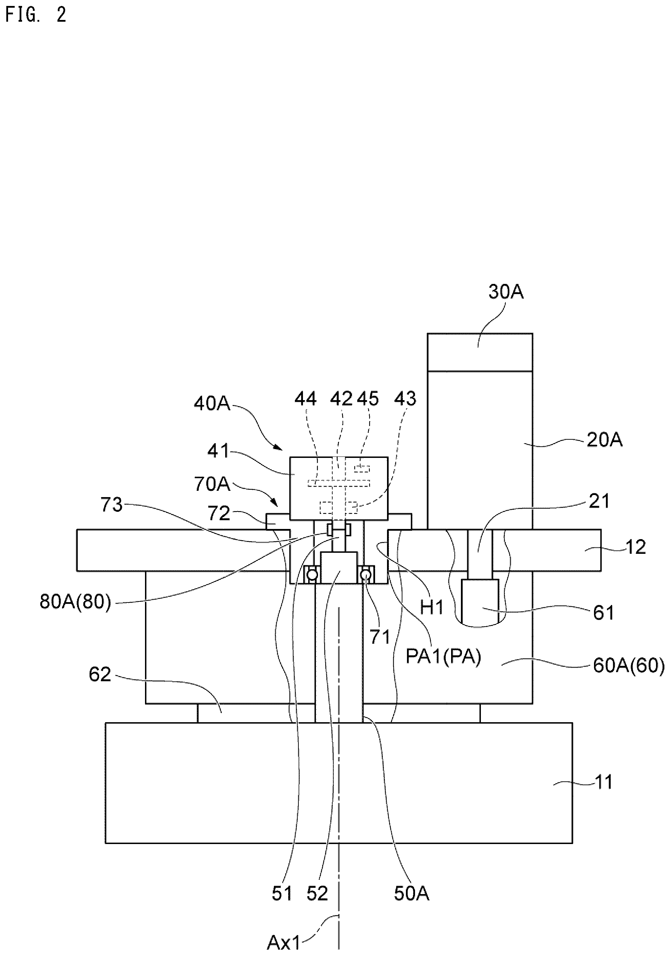

   FIG. 2 is a schematic diagram illustrating a peripheral structure of a rotation sensor.
[FIG. 3]

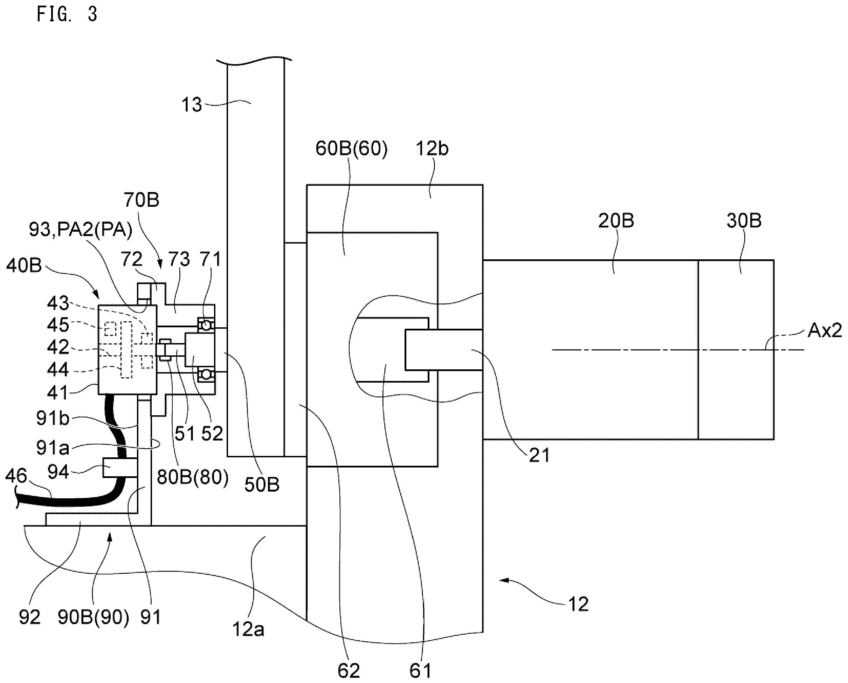

   FIG. 3 is a schematic diagram showing a variation of the peripheral structure of the rotation sensor.
[FIG. 4]

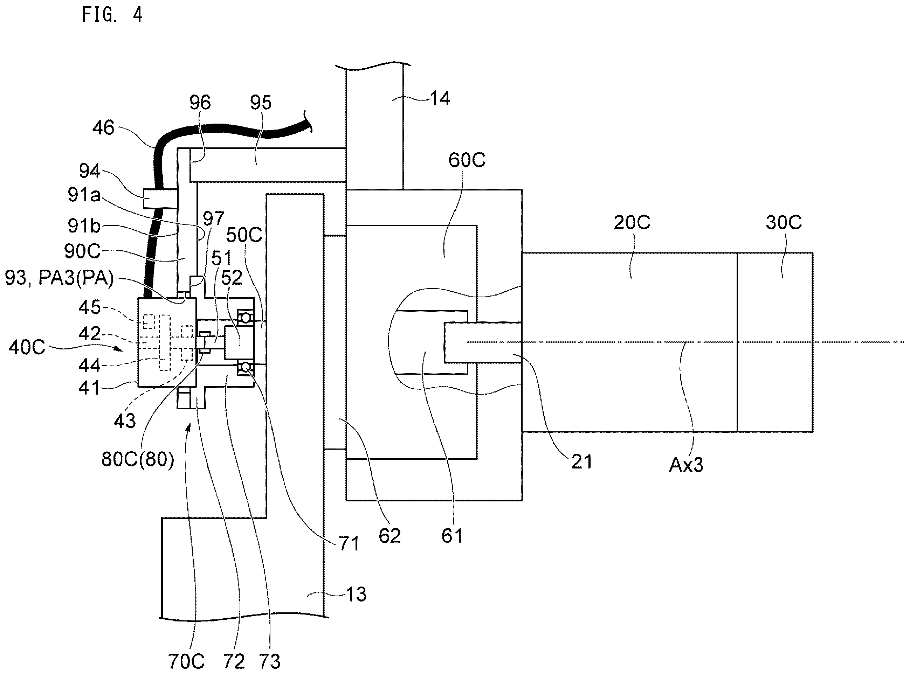

   FIG. 4 is a schematic diagram showing another variation of the peripheral structure of the rotation sensor.
[FIG. 5]

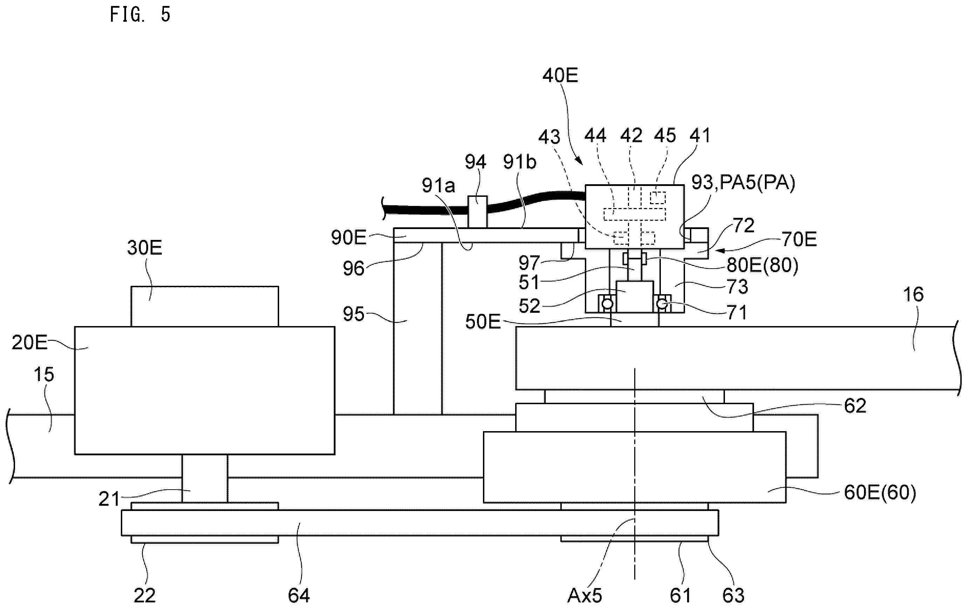

   FIG. 5 is a schematic diagram showing yet another variation of the peripheral structure of the rotation sensor.
[FIG. 6]

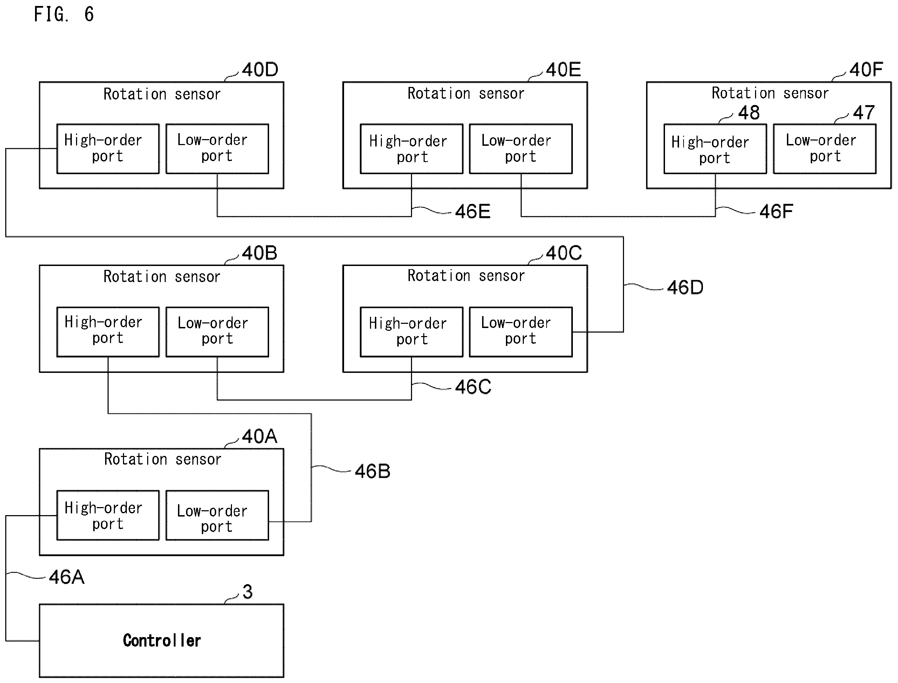

   FIG. 6 is a schematic diagram illustrating the connection of the rotation sensor to a robot controller.
[FIG. 7]

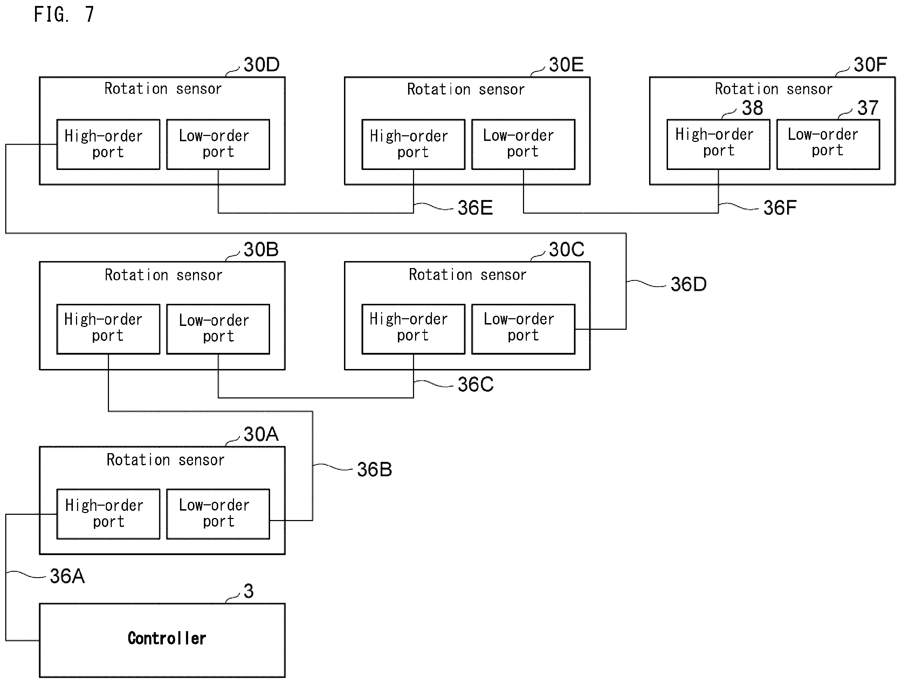

   FIG. 7 is a schematic diagram illustrating the connection of a motor rotation sensor relative to the robot controller.

### [Description of Embodiments]

Hereinafter, an embodiment will be described in detail with reference to the drawings. In the description, identical elements or elements that have identical functions are given the same reference sign, and redundant descriptions thereof shall be omitted

A robot system 1 shown in FIG. 1 is a system for causing a robot 2 to conduct work on workpieces. Examples of the work conducted on workpieces include assembly, welding, coating, inspection, and transfer. For example, the robot system 1 may include the robot 2 and a robot controller 3 that controls the robot 2.

The robot 2 is a serial link type robot and includes at least a pair of links that are coupled to each other through a joint axis. For example, the robot 2 may be a vertical articulated robot and include links 11, 12, 13, 14, 15, 16, and 17, an end effector 18, motors 20A, 20B, 20C, 20D, 20E, and 20F, motor rotation sensors 30A, 30B, 30C, 30D, 30E, and 30F, and rotation sensors 40A, 40B, 40C, 40D, 40E, and 40F.

The link 11 serves as a base of the robot 2 and fixedly attached to an installation surface. The installation surface may be a floor surface in a workspace, or may be a wall surface in a workspace. The installation surface may also be an upper surface of a mobile unit such as an automatic guided vehicle. For the sake of convenience, a side on which the installation surface faces is referred to as the "upper" side in the following description.

The link 12 serves as a swing part provided on the link 11. The links 11 and 12 are coupled to each other through a joint axis Ax1 perpendicular to the installation surface, and the link 12 rotates relative to the link 11 about the joint axis Ax1. Rotation of one object relative to another object as used herein refers to relative rotation of one object with respect to another object. For example, rotation of one object relative to another object includes a state in which one object stops and another object rotates in an absolute coordinates system. The same applies to the following descriptions.

The link 13 is connected to the link 12. The links 12 and 13 are coupled to each other through a joint axis Ax2 intersecting with (e.g., orthogonal to) the joint axis Ax1, and the link 13 rotates relative to the link 12 about the joint axis Ax2. Intersection as used herein refers to the relation of twist such as so-called grade separation. The same applies to the following descriptions. The link 13 extends in a direction away from the joint axis Ax2.

The link 14 is connected to the tip end of the link 13. The links 13 and 14 are coupled to each other through a joint axis Ax3 parallel to the joint axis Ax2, and the link 14 rotates relative to the link 13 about the joint axis Ax3. The link 14 extends in a direction away from the joint axis Ax3 along a joint axis Ax4 intersecting with (e.g., orthogonal to) the joint axis Ax3.

The link 15 is joined to the tip end of the link 14 and extends in a direction away from the link 14 along the joint axis Ax4. The links 14 and 15 are coupled to each other through the joint axis Ax4, and the link 15 rotates relative to the link 13 about the joint axis Ax4.

The link 16 is connected to the tip end of the link 15. The links 15 and 16 are coupled to each other through a joint axis Ax5 intersecting with (e.g., orthogonal to) the joint axis Ax4, and the link 16 rotates relative to the link 15 about the joint axis Ax5. The link 16 extends in a direction away from the joint axis Ax5 along a joint axis Ax6 intersecting with (e.g., orthogonal to) the joint axis Ax5.

The link 17 is joined to the tip end of the link 16. The link 17 is expanded in a flange along a surface intersecting with (e.g., orthogonal to) the joint axis Ax6. The links 16 and 17 are coupled to each other through the joint axis Ax6, and the link 17 rotates relative to the link 16 about the joint axis Ax6. The link 17 is attached to the end effector 18. The end effector 18 acts on workpieces during work conducted on the workpieces. Examples of the end effector 18 include a gripper, a welding torch, a coating nozzle, and a tool holder.

With the above-described configuration, the robot 2 includes joints J1, J2, J3, J4, J5, and J6 that correspond respectively to the joint axes Ax1, Ax2, Ax3, Ax4, Ax5, and Ax6. The motors 20A, 20B, 20C, 20D, 20E, and 20F drive the joints J1, J2, J3, J4, J5, and J6, respectively. For example, the motor 20A may rotate the link 12 relative to the link 11 about the joint axis Ax1. For example, the motor 20B may rotate the link 13 relative to the link 12 about the joint axis Ax2. For example, the motor 20C may rotate the link 14 relative to the link 13 about the joint axis Ax3. For example, the motor 20D may rotate the link 15 relative to the link 14 about the joint axis Ax4. For example, the motor 20E may rotate the link 16 relative to the link 15 about the joint axis Ax5. For example, the motor 20F may rotate the link 17 relative to the link 16 about the joint axis Ax6.

Each of the motors 20A, 20B, 20C, 20D, 20E, and 20F may, for example, be a servomotor. The motors 20A, 20B, 20C, 20D, 20E, and 20F each include an output shaft 21 (see FIG. 2) and rotates the output shaft 21 by driving power supplied from the robot controller 3. Each of the joints is driven by the rotation of the output shaft 21.

The motor rotation sensors 30A, 30B, 30C, 30D, 30E, and 30F detect the rotation of the motors 20A, 20B, 20C, 20D, 20E, and 20F, respectively. For example, the motor rotation sensor 30A detects the rotation of the motor 20A (the rotation of the output shaft 21 of the motor 20A) for rotating the link 12 relative to the link 11. The motor rotation sensor 30B detects the rotation of the motor 20B for rotating the link 13 relative to the link 12. The motor rotation sensor 30C detects the rotation of the motor 20C for rotating the link 14 relative to the link 13. The motor rotation sensor 30D detects the rotation of the motor 20D for rotating the link 15 relative to the link 14. The motor rotation sensor 30E detects the rotation of the motor 20E for rotating the link 16 relative to the link 15. The motor rotation sensor 30F detects the rotation of the motor 20F for rotating the link 17 relative to the link 16.

Detection of rotation as used herein refers to generating a signal that is responsive to and represents rotation (e.g., an electrical signal or a light signal). For example, each of the motor rotation sensors 30A, 30B, 30C, 30D, 30E, and 30F may be a rotary encoder that generates a signal responsive to the rotation angle, or may be a potentiometer or a resolver that generates voltage responsive to the rotation angle.

The rotation of the motors 20A, 20B, 20C, 20D, 20E, and 20F correlates with the rotation of the joints J1, J2, J3, J4, J5, and J6. Thus, the rotation of the joints J1, J2, J3, J4, J5, and J6 can be indirectly detected based on the results of detection by the motor rotation sensors 30A, 30B, 30C, 30D, 30E, and 30F. In contrast to this, the rotation sensors 40A, 40B, 40C, 40D, 40E, and 40F directly detect the rotation of the joints J1, J2, J3, J4, J5, and J6.

For example, the rotation sensor 40A may directly detect the rotation of the link 12 relative to the link 11 (the rotation of the link 11 relative to the link 12). Directly detecting the rotation of the link 12 relative to the link 11 includes detecting relative rotation between a member fixedly attached to the link 11 and a member fixedly attached to the link 12.

For example, the rotation sensor 40A may be fixedly attached to the link 12 (first link). The rotation sensor 40A may detect the rotation of a rotator 50A relative to the link 12 (first link), the rotator 50A being fixedly attached to the link 11 (second link). The rotation sensor 40B may be fixedly attached to the link 12 (first link). The rotation sensor 40B may detect the rotation of a rotator 50B relative to the link 12 (first link), the rotator 50B being fixedly attached to the link 13 (second link). The rotation sensor 40C may be fixedly attached to the link 14 (first link). The rotation sensor 40C may detect the rotation of a rotator 50C relative to the link 14 (first link), the rotator 50C being fixedly attached to the link 13 (second link). The rotation sensor 40D may be fixedly attached to the link 14 (first link). The rotation sensor 40D may detect the rotation of a rotator 50D relative to the link 14 (first link), the rotator 50D being fixedly attached to the link 15 (second link). The rotation sensor 40E may be fixedly attached to the link 15 (first link). The rotation sensor 40E may detect the rotation of a rotator 50E relative to the link 15 (first link), the rotator 50E being fixedly attached to the link 16 (second link). The rotation sensor 40F may be fixedly attached to the link 16 (first link). The rotation sensor 40F may detect the rotation of a rotator 50F relative to the link 16 (first link), the rotator 50F being fixedly attached to the link 17 (second link).

The rotation sensors 40A, 40B, 40C, 40D, 40E, and 40F and the motor rotation sensors 30A, 30B, 30C, 30D, 30E, and 30F may also be configured to output the results of detection in a common data format. For example, the rotation sensors 40A, 40B, 40C, 40D, 40E, and 40F and the motor rotation sensors 30A, 30B, 30C, 30D, 30E, and 30F may be configured to transmit the results of detection expressed in a common data format to the robot controller 3 according to a common communication protocol.

Hereinafter, when there is no particular need to distinguish among the rotation sensors, among the rotators, or among the joint axes, each of the rotation sensors 40A, 40B, 40C, 40D, 40E, and 40F may be referred to as the rotation sensor 40, each of the rotators 50A, 50B, 50C, 50D, 50E, and 50F may be referred to as the rotator 50, and each of the joint axes Ax1, Ax2, Ax3, Ax4, Ax5, and Ax6 may be referred to as the joint axis Ax. As described above, since each rotation sensor 40 is fixedly attached to the first link and each rotator 50 is fixedly attached to the second link, deformation or the like of the second link relative to the first link may cause a shift in the position of the rotator 50 relative to the rotation sensor 40. In view of this, the robot 2 may include a holding member 70 for at least one of the rotation sensors 40A, 40B, 40C, 40D, 40E, and 40F. The holding member 70 is fixedly attached to the first link to hold the rotation sensor 40 and holds and allows the rotator 50 to rotate about the joint axis Ax.

The holding member 70 holds both of the rotation sensor 40 and the rotator 50. Thus, even if the second link becomes deformed relative to the first link, it is possible to reduce the occurrence of decentering or angular deviation of the rotator 50 relative to the rotation sensor 40. This improves the accuracy of rotation detection by the rotation sensor 40.

Holding and allowing the rotator 50 to rotate about the joint axis Ax refers to controlling the displacement of the rotator 50 in a direction intersecting with a joint axis Ax while allowing the rotator 50 to rotate about the joint axis Ax. The holding member 70 may be fixedly attached directly to the first link, or may be fixedly attached indirectly to the first link through a separate member.

As one example, the robot 2 may include the holding member 70 for each of the rotation sensors 40A, 40B, 40C, 40D, and 40E. Hereinafter, the peripheral structure of each of the rotation sensors 40A, 40B, 40C, and 40E is described individually. The peripheral structure of the rotation sensor 40D shall not be described here because it is similar to the peripheral structure of the rotation sensor 40A.

### [Peripheral Structure of Rotation Sensor 40A]

As shown in FIG. 2, the robot 2 further includes a speed reducer 60A (speed reducer 60). The speed reducer 60A transmits the rotation of the motor 20A (the rotation of the output shaft 21) to the link 11 so as to allow the link 11 to rotate relative to the link 12 about the joint axis Ax1. The motor 20A is connected to the link 12 from one side in a direction along the joint axis Ax1 (e.g., from above) at a position away from the joint axis Ax1. The link 11 is connected to the speed reducer 60A from the other side in the direction along the joint axis Ax1 (e.g., from below). The rotator 50A is a shaft that protrudes out from the link 11 toward the link 12 through the speed reducer 60A. A holding member 70A is fixedly attached to the link 12 from above to hold the rotation sensor 40A and is mounted on the speed reducer 60A from above.

For example, the speed reducer 60A may include an input shaft 61 and an output shaft 62 and may be fixedly attached to the link 12. The input shaft 61 rotates relative to the link 12 about a rotation axis parallel to the joint axis Ax1. The output shaft 62 protrudes downward to be fixedly attached to the link 11 and rotates relative to the link 12 about the joint axis Ax1. The speed reducer 60A is configured to reduce the speed of the rotation of the input shaft 61 and transmit the rotation to the output shaft 62.

The motor 20A is fixedly attached to the link 12, with the output shaft 21 facing downward. The output shaft 21 of the motor 20A is fixedly attached to the input shaft 61 of the speed reducer 60A. This allows the rotation of the output shaft 21 to be transmitted to the link 11. For example, the input shaft 61 may rotate together with the output shaft 21, the rotation of the input shaft 61 may be transmitted to the output shaft 62, and the link 11 may rotate relative to the link 12 together with the output shaft 62. The speed reducer 60A including the output shaft 62 is hollow in the direction along the joint axis Ax1, and the rotator 50A protrudes out from the link 11 toward the link 12 through the inside of the output shaft 62.

The rotator 50A includes a first end portion 51 and a second end portion 52 that are arranged in order from the tip end (the upper end). The outer diameter of the first end portion 51 is smaller than the outer diameter of a portion that is adjacent to the side closer to the link 11 with respect to the first end portion 51. The outer diameter of the second end portion 52 is smaller than the outer diameter of a portion that is adjacent to the side closer to the link 11 with respect to the second end portion 52.

The rotation sensor 40A includes a sensor body 41, a sensor shaft 42, a sensor bearing 43, a code disk 44, and a detector 45. The sensor body 41 is held by the holding member 70A. For example, the sensor body 41 may be fixedly attached to the holding member 70A from above.

The sensor shaft 42 rotates relative to the sensor body 41 about the joint axis Ax1. The sensor shaft 42 is held by the sensor body 41 to become rotatable about the joint axis Ax1 inside the sensor body 41. For example, the sensor body 41 may hold the sensor shaft 42 via the sensor bearing 43. The sensor bearing 43 may be an anti-friction bearing, or may be a slide bearing. The sensor shaft 42 protrudes downward from the sensor body 41. The detector 45 is placed inside the sensor body 41 and detects the rotation of the sensor shaft 42 relative to the sensor body 41.

For example, the sensor body 41 may include the code disk 44. The code disk 44 juts out in a direction away from the outer peripheral surface of the sensor shaft 42 around the entire circumference (the entire circumference around the joint axis Ax1) and rotates together with the sensor shaft 42. The code disk 44 includes a code track extending in a circumferential direction about the joint axis Ax. The detector 45 is fixedly attached to face the code track of the code disk 44 inside the sensor body 41. The code track passes the detector 45 along with the rotation of the code disk 44. The detector 45 generates a signal responsive to the passage of the code track.

The holding member 70A to which the rotation sensor 40A is fixedly attached to is fixedly attached to the link 12 and holds and allows the rotator 50A to rotate about the joint axis Ax1. For example, the holding member 70A may be fixedly attached directly to the link 12 from above. For example, the holding member 70A may be fixedly attached to the link 12 in a removable state by bolt fastening or the like. When fixedly attached to the link 12 from above, the holding member 70Ais mounted on the rotator 50A from above.

The holding member 70A may hold the rotator 50A through a bearing 71. For example, the holding member 70A may hold the second end portion 52 of the rotator 50A from the outer periphery through the bearing 71. The bearing 71 may be an anti-friction bearing, or may be a slide bearing.

For example, the holding member 70A may include a body holder 72 and a shaft holder 73. The body holder 72 holds the sensor body 41. For example, the body holder 72 may expand in a plane intersecting with (e.g., orthogonal to) the joint axis Ax1. The sensor body 41 is fixedly attached to the body holder 72 from above. For example, the sensor body 41 may be fixedly attached to the body holder 72 in a removable state by bolt fastening or the like. The sensor shaft 42 protruding downward from the sensor body 41 penetrates the body holder 72 and protrudes downward of the body holder 72.

The shaft holder 73 protrudes downward from the body holder 72 and surrounds the second end portion 52 about the joint axis Ax1 to hold the rotator 50A. The outer periphery of the body holder 72 about the joint axis Ax1 and the inner and outer peripheries of the shaft holder 73 about the joint axis Ax1 may form concentric circles.

The robot 2 may further include a joint member 80A (joint member 80). The joint member 80A couples the rotator 50A to the sensor shaft 42. The joint member 80A may couple the rotator 50A to the sensor shaft 42 within the shaft holder 73. For example, the joint member 80A may be placed inside the shaft holder 73 and couple the first end portion 51 of the rotator 50A to the sensor shaft 42.

The joint member 80A may also be configured to couple the rotator 50A to the sensor shaft 42 while accommodating a shift in position between the sensor shaft 42 and the rotator 50A held by the holding member 70A. Examples of the joint member 80A include an Oldham's coupling, a bellows coupling, and a slit coupling. The Oldham's coupling is a coupling that couples two semicircular disks through a separator having an orthogonal slide orbit so as to admit a parallel axial shift. The bellows coupling is a coupling that couples two shafts by a bellows having a metallic waveform so as to accommodate an axial shift or angular displacement. The slit coupling is a coupling that is structured to have a plurality of slits in a cylindrical body so as to have elasticity and accommodate an axial shift.

The robot 2 may further include a position adjuster PA1 (position adjuster PA). The position adjuster PA1 enables adjusting the position of the holding member 70A relative to the link 12. For example, the link 12 may have an opening H1 that passes the shaft holder 73 from above to below, and the opening H1 may have an inner diameter greater than the outer diameter of the shaft holder 73. This allows the position adjuster PA1 to be formed between the inner periphery of the opening H1 and the outer periphery of the shaft holder 73.

### [Peripheral Structure of Rotation Sensor 40B]

As show in FIG. 3, the robot 2 further includes a speed reducer 60B (speed reducer 60). The speed reducer 60B transmits the rotation of the motor 20B (the rotation of the output shaft 21) to the link 13 so as to allow the link 13 to rotate relative to the link 12 about the joint axis Ax2.

The motor 20B is connected to the link 12 from one side in the direction along the joint axis Ax2 (from the right side in the drawing). The link 13 is connected to the output shaft 62 of the speed reducer 60B from the other side in the direction along the joint axis Ax2 (the left side in the drawing). A holding member 70B is mounted on the rotator 50B from the other side described above.

For example, the link 12 may include a swing base 12a and a protrusion 12b. The swing base 12a expands in a plane intersecting with (e.g., orthogonal to) the joint axis Ax1. The protrusion 12b protrudes upward from the swing base 12a.

The speed reducer 60B includes an input shaft 61 and an output shaft 62 and is fixedly attached to the protrusion 12b from the other side described above. The input shaft 61 rotates relative to the protrusion 12b about the joint axis Ax2. The output shaft 62 protrudes out toward the other side described above to be fixedly attached to the link 13, and rotates relative to the protrusion 32 about the joint axis Ax2. The speed reducer 60B is configured to reduce the speed of the rotation of the input shaft 61 and transmit the rotation to the output shaft 62.

The motor 20B is fixedly attached to the protrusion 12b from the one side described above, with the output shaft 21 facing the other side described above. The output shaft 21 of the motor 20B is fixedly attached to the input shaft 61 of the speed reducer 60B. This allows the rotation of the output shaft 21 to be transmitted to the link 13.

The rotator 50B is a shaft that protrudes out from the link 13 toward the other side described above (leftward in the drawing) along the joint axis Ax2. The rotator 50B includes a first end portion 51 and a second end portion 52 that are arranged in order from the tip end (the left end in the drawing). The outer diameter of the first end portion 51 is smaller than the outer diameter of a portion that is adjacent to the side closer to the link 13 with respect to the first end portion 51. The outer diameter of the second end portion 52 is smaller than the outer diameter of a portion that is adjacent to the side loser to the link 13 with respect to the second end portion 523.

The rotation sensor 40B is configured in the same manner as the rotation sensor 40A and includes a sensor body 41, a sensor shaft 42, a sensor bearing 43, a code disk 44, and a detector 45. The sensor body 41 is held by the holding member 70B. For example, the sensor body 41 may be fixedly attached to the holding member 70B from the other side described above. The sensor shaft 42 rotates relative to the sensor body 41 about the joint axis Ax2. The sensor shaft 42 protrudes out from the sensor body 41 toward the one side described above.

The holding member 70B to which the rotation sensor 40B is fixedly attached is fixedly attached to the link 12 and holds and allows the rotator 50B to rotate about the joint axis Ax2. The holding member 70B is amounted on the rotator 50B from the other side described above.

The holding member 70B may hold the rotator 50B through a bearing 71. For example, the holding member 70B may hold the second end portion 52 of the rotator 50B from the outer periphery through the bearing 71. The bearing 71 may be an anti-friction bearing, or may be a slide bearing.

For example, like the holding member 70A, the holding member 70B may include a body holder 72 and a shaft holder 73. The body holder 72 holds the sensor body 41. For example, the body holder 72 may expand in a plane intersecting with (e.g., orthogonal to) the joint axis Ax2. The sensor body 41 is fixedly attached to the body holder 72 from the other side described above. For example, the sensor body 41 may be fixedly attached to the body holder 72 in a removable state by bolt fastening or the like. The sensor shaft 42 protruding out from the sensor body 41 toward the one side described above protrudes out toward the one side described above through the body holder 72.

The shaft holder 73 protrudes out from the body holder 72 toward the one side described above and surrounds the second end portion 52 about the joint axis Ax2 to hold the rotator 50B. The outer periphery of the body holder 72 about the joint axis Ax2 and the inner and outer peripheries of the shaft holder 73 about the joint axis Ax2 may form concentric circles.

The robot 2 may further include a joint member 80B (joint member 80). The joint member 80B couples the rotator 50B to the sensor shaft 42. The joint member 80B couples the rotator 50B to the sensor shaft 42 within the shaft holder 73. For example, the joint member 80B may be placed inside the shaft holder 73 and couple the first end portion 51 of the rotator 50B to the sensor shaft 42.

The joint member 80B may also be configured to couple the rotator 50B to the sensor shaft 42 while accommodating a shift in position between the sensor shaft 42 and the rotator 50B held by the holding member 70B. As described above, examples of the joint member 80B include an Oldham's coupling, a bellows coupling, and a slit coupling.

Although the holding member 70A is fixedly attached directly to the link 12, the holding member 70B is fixedly attached indirectly to the link 12. For example, the robot 2 may further include a bridge member 90B (bridge member 90), and the holding member 70B may be fixedly attached to the link 12 through the bridge member 90B.

The bridge member 90B is a member separate from the holding member 70B, is fixedly attached to the holding member 70B so as to extend in a direction away from the joint axis Ax2, and is fixedly attached to the link 12. The bridge member 90B extends from the holding member 70B in the direction away from the joint axis Ax2 and is fixedly attached to the link 12 outward of the outer periphery of the link 13 about the joint axis Ax2. For example, the bridge member 90B may extend downward from the holding member 70B and may be fixedly attached to a swing base 12a.

For example, the bridge member 90B may include a bridge plate 91 and a bracket 92. The bridge plate 91 expands in a plane intersecting with (e.g., orthogonal to) the joint axis Ax2 and extends downward from the holding member 70B. The bracket 92 juts out from the lower end of the bridge plate 91 toward the other side described above along the upper surface of the swing base 12a. The bracket 92 is fixedly attached to the swing base 12a in a removable state by bolt fastening or the like.

The bridge plate 91 is fixedly attached to the body holder 72 of the holding member 70B from the other side described above. For example, the bridge plate 91 may have a sensor opening 93 that passes the rotation sensor 40B from the one side described above toward the other side described above, the rotation sensor 40B being fixedly attached to the body holder 72 from the other side described above. Around the rotation sensor 40B passing through the sensor opening 93, the bridge plate 91 is fixedly attached to the body holder 72 in a removable state by bolt fastening or the like.

The robot 2 may further include a position adjuster PA2 (position adjuster PA). The position adjuster PA2 enables adjusting the position of the holding member 70B relative to the link 12. The position adjuster PA2 may be provided in the bridge member 90B so as to enable adjusting the position of the holding member 70B relative to the bridge member 90B. For example, the inner diameter of the sensor opening 93 may be greater than the outer diameter of the sensor body 41. This allows the position adjuster PA2 to be formed between the inner periphery of the sensor opening 93 and the outer periphery of the sensor body 41.

The rotation sensor 40B may further include a cable 46, and the bridge member 90B may further include a cable guide 94. The cable 46 is wired from the sensor body 41 to the link 12 and transmits a signal generated by the rotation sensor 40B. The cable guide 94 guides the cable 46 from the sensor body 41 to the link 12 along the bridge member 90B.

The bridge plate 91 of the bridge member 90B includes a first surface 91a facing the link 13 and a second surface 91b that is a surface opposite to the first surface 91a. The cable guide 94 may be configured to guide the cable 46 along the second surface 91b. For example, the cable guide 94 may be a clip that protrudes out from the second surface 91b and holds the cable 46. The cable guide 94 may also be a groove that is formed in the bridge plate 91 so as to become recessed from the second surface 91b and that receives the cable 46.

### [Peripheral Structure of Rotation Sensor 40C]

As shown in FIG. 4, the robot 2 furthers include a speed reducer 60C (speed reducer 60). The speed reducer 60C transmits the rotation of the motor 20C (the rotation of the output shaft 21) to the link 13 so as to allow the link 13 to rotate relative to the link 14 about the joint axis Ax3.

The motor 20C is connected to the link 14 from one side in a direction along the joint axis Ax3 (from the right side in the drawing). The link 13 is connected to the speed reducer 60C from the other side in the direction along the joint axis Ax3 (from the left side in the drawing). The holding member 70C is mounted on the rotator 50C from the other side described above.

The speed reducer 60C includes an input shaft 61 and an output shaft 62 and is fixedly attached to the link 14 from the other side described above. The input shaft 61 rotates relative to the link 14 about the joint axis Ax3. The output shaft 62 protrudes out toward the other side described above to be fixedly attached to the link 13 and rotates relative to the link 14 about the joint axis Ax3. The speed reducer 60C is configured to reduce the speed of the rotation of the input shaft 61 and transmit the rotation to the output shaft 62.

The motor 20C is fixedly attached to the link 14 from the one side described above, with the output shaft 21 facing the other side described above. The output shaft 21 of the motor 20C is fixedly attached to the input shaft 61 of the speed reducer 60C. This allows the rotation of the output shaft 21 to be transmitted to the link 13.

The rotator 50C is a shaft that protrudes out from the link 13 toward the other side described above (the left side in the drawing) along the joint axis Ax3. The rotator 50C includes a first end portion 51 and a second end portion 52 that are arranged in order from the tip end (the left end in the drawing). The outer diameter of the first end portion 51 is smaller than the outer diameter of a portion that is adjacent to the side closer to the link 13 with respect to the first end portion 51. The outer diameter of the second end portion 52 is smaller than the outer diameter of a portion that is adjacent to the side closer to the link 13 with respect to the second end portion 52.

The rotation sensor 40C is configured in the same manner as the rotation sensor 40A and includes a sensor body 41, a sensor shaft 42, a sensor bearing 43, a code disk 44, and a detector 45. The sensor body 41 is held by the holding member 70C. For example, the sensor body 41 is fixedly attached to the holding member 70C from the other side described above. The sensor shaft 42 rotates relative to the sensor body 41 about the joint axis Ax3. The sensor shaft 42 protrudes out from the sensor body 41 toward the one side described above.

The holding member 70C to which the rotation sensor 40C is fixedly attached is fixedly attached to the link 14 and holds and allows the rotator 50C to rotate about the joint axis Ax3. The holding member 70C is mounted on the rotator 50C from the other side described above.

The holding member 70C may hold the rotator 50C through a bearing 71. For example, the holding member 70C may hold the second end portion 52 of the rotator 50C from the outer periphery through the bearing 71. The bearing 71 may be an anti-friction bearing, or may be a slide bearing.

For example, like the holding member 70A, the holding member 70C may include a body holder 72 and a shaft holder 73. The body holder 72 holds the sensor body 41. For example, the body holder 72 may expand in a plane intersecting with (e.g., orthogonal to) the joint axis Ax3. The sensor body 41 is fixedly attached to the body holder 72 from the other side described above. For example, the sensor body 41 may be fixedly attached to the body holder 72 in a removable state by bolt fastening or the like. The sensor shaft 42 protruding out from the sensor body 41 toward the one side described above protrudes out toward the one side described above through the body holder 72.

The shaft holder 73 protrudes out from the body holder 72 toward the one side described above and surrounds the second end portion 52 about the joint axis Ax3 to hold the rotator 50C. The outer periphery of the body holder 72 about the joint axis Ax3 and the inner and outer peripheries of the shaft holder 73 about the joint axis Ax3 may form concentric circles.

The robot 2 may further include a joint member 80C (joint member 80). The joint member 80C couples the rotator 50C to the sensor shaft 42. The joint member 80C may couple the rotator 50C to the sensor shaft 42 inside the shaft holder 73. For example, the joint member 80C may be placed inside the shaft holder 73 and couple the first end portion 51 of the rotator 50C to the sensor shaft 42.

The joint member 80C may be configured to couple the rotator 50C to the sensor shaft 42 while accommodating a shift in position between the sensor shaft 42 and the rotator 50C held by the holding member 70C. As described above, examples of the joint member 80C include an Oldham's coupling, a bellows coupling, and a slit coupling.

As in a state in which the holding member 70B is fixedly attached indirectly to the link 12, the holding member 70C is fixedly attached indirectly to the link 14. For example, the robot 2 may further include a bridge member 90C (bridge member 90) and a support member 95, and the holding member 70C may be fixedly attached to the link 14 through the bridge member 90C and the support member 95.

The support member 95 protrudes out from the link 14 toward the other side described above, outward of the outer periphery of the link 13 about the joint axis Ax3. The support member 95 is a member separate from the link 14 and may be fixedly attached to the link 14 in a removable state by bolt fastening or the like. The support member 95 may be integrally molded with the link 14.

The bridge member 90C is a member separate from the holding member 70C and the support member 95, is fixedly attached to the holding member 70C so as to extend in a direction away from the joint axis Ax3, and is fixedly attached to the link 14 through the support member 95. The bridge member 90C extends from the holding member 70C in the direction away from the joint axis Ax3 and is fixedly attached to the support member 95 outward of the outer periphery of the link 13 about the joint axis Ax3.

For example, the bridge member 90C may expand in a plane intersecting with (e.g., orthogonal to) the joint axis Ax3 and extend from the holding member 70C in the direction away from the joint axis Ax3. The bridge member 90C includes a first connection surface 96 and a second connection surface 97. The first connection surface 96 and the second connection surface 97 face the same side in a direction along the joint axis Ax3 (e.g., the one side described above).

The bridge member 90C is fixedly attached to the link 14 so as to bring the first connection surface 96 into contact with the link 14. By being fixedly attached to the link 14 as described above, the support member 95 configures part of the link 14. Thus, a state in which the bridge member 90C is fixedly attached to the link 14 so as to bring the first connection surface 96 into contact with the link 14 includes a state in which the bridge member 90C is fixedly attached to the support member 95 so as to bring the first connection surface 96 into contact with the support member 95.

The bridge member 90C is fixedly attached to the body holder 72 from the other side described above so as to bring the second connection surface 97 into contact with the body holder 72 of the holding member 70B. For example, the bridge member 90C may have a sensor opening 93 that passes the rotation sensor 40C from the one side described above toward the other side described above, the rotation sensor 40C being fixedly attached to the body holder 72 from the other side described above. Around the rotation sensor 40C passing through the sensor opening 93, the bridge member 90C is fixedly attached to the body holder 72 in a removable state by bolt fastening or the like.

The robot 2 may further include a position adjuster PA3 (position adjuster PA). The position adjuster PA3 enables adjusting the position of the holding member 70C relative to the link 14. The position adjuster PA3 may be provided in the bridge member 90C so as to enable adjusting the position of the holding member 70C relative to the bridge member 90C. For example, the inner diameter of the sensor opening 93 may be greater than the outer diameter of the sensor body 41. This allows the position adjuster PA3 to be formed between the inner periphery of the sensor opening 93 and the outer periphery of the sensor body 41.

The rotation sensor 40C may further include a cable 46, and the bridge member 90C may further include a cable guide 94. The cable 46 is wired from the sensor body 41 to the link 14 and transmits a signal generated by the rotation sensor 40C. The cable guide 94 guides the cable 46 from the sensor body 41 to the link 14 along the bridge member 90C.

The bridge member 90C includes a bridge plate 91 having a first surface 91a facing the link 13 and a second surface 91b that is a surface opposite to the first surface 91a. The cable guide 94 may be configured to guide the cable 46 along the second surface 91b. For example, the cable guide 94 may be a clip that protrudes out from the second surface 91b to hold the cable 46. The cable guide 94 may also be a groove that is formed in the bridge plate 91 to become recessed from the second surface 91b and that receives the cable 46.

### [Peripheral Structure of Rotation Sensor 40E]

As shown in FIG. 5, the robot 2 further includes a speed reducer 60E (speed reducer 60). The speed reducer 60E transmits the rotation of the motor 20E (the rotation of the output shaft 21) to the link 16 so as to rotate the link 16 relative to the link 15 about the joint axis Ax5.

The motor 20E is connected to the link 15 from one side in a direction along the joint axis Ax5 (from above in the drawing) at a position away from the joint axis Ax5. The link 16 is connected to the speed reducer 60E from the one side described above. The holding member 70E is mounted on the rotator 50E from the one side described above.

The speed reducer 60E includes an input shaft 61 and an output shaft 62 and is fixedly attached to the link 15 from the other side in the direction along the joint axis Ax5 (from below in the drawing). The input shaft 61 protrudes out toward the other side described above and rotates relative to the link 15 about the joint axis Ax5. The output shaft 62 protrudes out toward the one side described above, is fixedly attached to the link 16 through the link 15, and rotates relative to the link 15 about the joint axis Ax5. The speed reducer 60E is configured to reduce the speed of the rotation of the input shaft 61 and transmit the rotation to the output shaft 62.

The motor 20E is fixedly attached to the link 15 from the one side described above, with the output shaft 21 facing the other side described above. The output shaft 21 of the motor 20E protrudes out toward the other side described above through the link 15. The robot 2 further includes a pulley 22, a pulley 63, and a belt 64. The pulley 22 is fixedly attached to the outer periphery of the output shaft 21, which protrudes out toward the other side described above. The pulley 63 is fixedly attached to the outer periphery of the input shaft 61, which protrudes out toward the other side described above. The belt 64 runs between the outer periphery of the pulley 22 and the outer periphery of the pulley 63 so as to form a ring around the joint axis Ax5 and transmits rotation from the pulley 22 to the pulley 63. This allows the rotation of the output shaft 21 to be transmitted to the link 16. For example, the belt 64 may transmit rotation from the output shaft 21 to the input shaft 61, whereas the speed reducer 60E transmits rotation from the input shaft 61 to the link 16. Note that the element for transmitting rotation from the output shaft 21 to the input shaft 61 is not limited to the belt 64. Instead of the pulleys 22 and 63 and the belt 64, the robot 2 may include a plurality of gears that transmit rotation from the output shaft 21 to the input shaft 61.

The rotator 50E is a shaft that protrudes out from the link 16 toward the one side described above (information in the drawing) along the joint axis Ax5. The rotator 50E includes a first end portion 51 and a second end portion 52 that are arranged in order from the tip end (the left end in the drawing). The outer diameter of the first end portion 51 is smaller than the outer diameter of a portion that is adjacent to the side closer to the link 11 with respect to the first end portion 51. The outer diameter of the second end portion 52 is smaller than the outer diameter of a portion that is adjacent to the side closer to the link 11 with respect to the second end portion 52.

The rotation sensor 40E is configured in the same manner as the rotation sensor 40A and includes a sensor body 41, a sensor shaft 42, a sensor bearing 43, a code disk 44, and a detector 45. The sensor body 41 is held by the holding member 70E. For example, the sensor body 41 may be fixedly attached to the holding member 70E from the one side described above. The sensor shaft 42 rotates relative to the sensor body 41 about the joint axis Ax5. The sensor shaft 42 protrudes out from the sensor body 41 toward the other side described above.

The holding member 70E to which the rotation sensor 40E is fixedly attached is fixedly attached to the link 15 and holds and allows the rotator 50E to rotate about the joint axis Ax5. The holding member 70E is mounted on the rotator 50E from the one side described above.

The holding member 70E may hold the rotator 50E via the bearing 71. For example, the holding member 70E may hold the second end portion 52 of the rotator 50E via the bearing 71 from the outer periphery. The bearing 71 may be an anti-friction bearing, or may be a slide bearing.

For example, like the holding member 70A, the holding member 70E may include a body holder 72 and a shaft holder 73. The body holder 72 holds the sensor body 41. For example, the body holder 72 may expand in a plane intersecting with (e.g., orthogonal to) the joint axis Ax5. The sensor body 41 is fixedly attached to the body holder 72 from the one side described above. For example, the sensor body 41 may be fixedly attached to the body holder 72 in a removable state by bolt fastening or the like. The sensor shaft 42 protruding out from the sensor body 41 toward the other side described above protrudes out toward the other side described above through the body holder 72

The shaft holder 73 protrudes out from the body holder 72 toward the other side described above and surrounds the second end portion 52 about the joint axis Ax5 to hold the rotator 50E. The outer periphery of the body holder 72 about the joint axis Ax5 and the inner and outer peripheries of the shaft holder 73 about the joint axis Ax5 may form concentric circles.

The robot 2 may further include a joint member 80E (joint member 80). The joint member 80E couples the rotator 50E to the sensor shaft 42. The joint member 80E may couple the rotator 50E to the sensor shaft 42 inside the shaft holder 73. For example, the joint member 80E may be placed inside the shaft holder 73 and couple the first end portion 51 of the rotator 50E to the sensor shaft 42.

The joint member 80E may be configured to couple the rotator 50E to the sensor shaft 42 while accommodating a shift in position between the sensor shaft 42 and the rotator 50E held by the holding member 70E. As described above, examples of the joint member 80E include an Oldham's coupling, a bellows coupling, and a slit coupling.

As in the case where the holding member 70B is fixedly attached indirectly to the link 12, the holding member 70E is fixedly attached indirectly to the link 15. For example, the robot 2 may further include a bridge member 90E (bridge member 90) and a support member 95, and the holding member 70E may be fixedly attached to the link 15 through the bridge member 90E and the support member 95.

The support member 95 protrudes out from the link 15 toward the one side described above, outward of the outer periphery of the link 16 about the joint axis Ax5. The support member 95 is a member separate from the link 15 and may be fixedly attached to the link 15 in a removable state by bolt fastening or the like. The support member 95 may be integrally molded with the link 15.

The bridge member 90E is a member separate from the holding member 70E and the support member 95, is fixedly attached to the holding member 70E so as to extend in a direction away from the joint axis Ax5, and is fixedly attached to the link 15 through the support member 95. The bridge member 90E extends from the holding member 70E in the direction away from the joint axis Ax5 and is fixedly attached to the support member 95 outward of the outer periphery of the link 16 about the joint axis Ax5.

For example, the bridge member 90E may expand in a plane intersecting with (e.g., orthogonal to) the joint axis Ax5 and extend from the holding member 70E in the direction away from the joint axis Ax5. The bridge member 90E includes a first connection surface 96 and a second connection surface 97. The first connection surface 96 and the second connection surface 97 face the same side in a direction along the joint axis Ax5 (e.g., the other side described above).

The bridge member 90E is fixedly attached to the link 15 so as to bring the first connection surface 96 into contact with the link 15. By being fixedly attached to the link 15 as described above The support member 95 configures part of the link 15 by being. Thus, a state in which the bridge member 90E is fixedly attached to the link 15 so as to bring the first connection surface 96 into contact with the link 15 includes a state in which the bridge member 90E is fixedly attached to the support member 95 so as to bring the first connection surface 96 into contact with the support member 95.

The bridge member 90E is fixedly attached to the body holder 72 from the one side described above so as to bring the second connection surface 97 into contact with the body holder 72 of the holding member 70E. For example, the bridge member 90E may have a sensor opening 93 that passes the rotation sensor 40E from the other side described above toward the one side described above, the rotation sensor 40E being fixedly attached to the body holder 72 from the one side described above. Around the rotation sensor 40E passing through the sensor opening 93, the bridge member 90E is fixedly attached to the body holder 72 in a removable state by bolt fastening or the like.

The robot 2 may further include a position adjuster PA5 (position adjuster PA). The position adjuster PA5 enables adjusting the position of the holding member 70E relative to the link 15. The position adjuster PA5 may be provided in the bridge member 90E so as to enable adjusting the position of the holding member 70E relative to the bridge member 90E. For example, the inner diameter of the sensor opening 93 may be greater than the outer diameter of the sensor body 41. This allows the position adjuster PA5 to be formed between the inner periphery of the sensor opening 93 and the outer periphery of the sensor body 41.

The rotation sensor 40E may further include a cable 46, and the bridge member 90E may further include a cable guide 94. The cable 46 is wired from the sensor body 41 to the link 15 and transmits a signal generated by the rotation sensor 40E. The cable guide 94 guides the cable 46 from the sensor body 41 to the link 15 along the bridge member 90E.

The bridge member 90E includes a bridge plate 91 having a first surface 91a facing the link 16 and a second surface 91b that is a surface opposite to the first surface 91a. The cable guide 94 may be configured to guide the cable 46 along the second surface 91b. For example, the cable guide 94 may be a clip that protrudes out from the second surface 91b to hold the cable 46. The cable guide 94 may also be a groove that is formed in the bridge plate 91 to become recessed from the second surface 91b and that receives the cable 46.

### [Communication between Rotation Sensors and Robot Controller]

Among the rotation sensors 40A, 40B, 40C, 40D, 40E, and 40F, at least the rotation sensors 40 of the robot 2 may be configured such that one of the rotation sensors 40 (second rotation sensor) transmits the result of detection to another rotation sensor 40 via serial communication, and the other rotation sensor 40 transmits the result of its own detection and the result of detection received from the one rotation sensor 40 via serial communication.

For example, as shown in FIG. 6, each of the rotation sensors 40A, 40B, 40C, 40D, 40E, and 40F may include a low-order port 47 and a high-order port 48 and may be configured to receive data at the low-order port 47 and transmit the received data and the result of its own detection from the high-order port 48. As one example, FIG. 6 shows a state in which, using the low-order ports 47 and the high-order ports 48, the rotation sensors 40A, 40B, 40C, 40D, 40E, and 40F are connected in serial form to the robot controller 3 via the cables 46A, 46B, 46C, 46D, 46E, and 46F.

As shown in FIG. 6, the cable 46F connects the high-order port 48 of the rotation sensor 40F to the low-order port 47 of the rotation sensor 40E. The cable 46E connects the high-order port 48 of the rotation sensor 40E to the low-order port 47 of the rotation sensor 40D. The cable 46D connects the high-order port 48 of the rotation sensor 40D to the low-order port 47 of the rotation sensor 40C. The cable 46C connects the high-order port 48 of the rotation sensor 40C to the low-order port 47 of the rotation sensor 40B. The cable 46B connects the high-order port 48 of the rotation sensor 40B to the low-order port 47 of the rotation sensor 40A. The cable 46A connects the high-order port 48 of the rotation sensor 40A to the robot controller 3.

In this connection, the rotation sensor 40F transmits the result of its own detection to the rotation sensor 40E. The rotation sensor 40E transmits the result of its own detection and the result of detection received from the rotation sensor 40F to the rotation sensor 40D. The rotation sensor 40D transmits the result of its own detection and the results of detection received from the rotation sensors 40E and 40F to the rotation sensor 40C. The rotation sensor 40C transmits the result of its own detection and the results of detection received from the rotation sensors 40D, 40E, and 40F to the rotation sensor 40B. The rotation sensor 40B transmits the result of its own detection and the results of detection received from the rotation sensors 40C, 40D, 40E, and 40F to the rotation sensor 40A. The rotation sensor 40A transmits the result of its own detection and the results of detection received from the rotation sensors 40B, 40C, 40D, 40E, and 40F to the robot controller 3. In this way, the series of cables 46A, 46B, 46C, 46D, 46E, and 46F allows transmission of all of the results of detection received from the rotation sensors 40A, 40B, 40C, 40D, 40E, and 40F to the robot controller 3.

Similarly, among the motor rotation sensors 30A, 30B, 30C, 30D, 30E, and 30F, at least the motor rotation sensors 30 of the robot 2 are configured such that one of the motor rotation sensors 30 (second motor rotation sensor) transmits the result of detection to another motor rotation sensor 30 via serial communication, and the other motor rotation sensor 30 transmits the result of its own detection and the result of detection received from the above-described one motor rotation sensor 30 via serial communication.

For example, as shown in FIG. 7, each of the motor rotation sensors 30A, 30B, 30C, 30D, 30E, and 30F may include a high-order port 37 and a low-order port 38 and may be configured to receive data at the high-order port 37 and transmit the received data and the result of its own detection from the low-order port 38. As one example, FIG 7 shows a state in which, using the high-order ports 37 and the low-order ports 38, the motor rotation sensors 30A, 30B, 30C, 30D, 30E, and 30F are connected in serial form to the robot controller 3 via the cables 36A, 36B, 36C, 36D, 36E, and 36F. As in the example shown in FIG. 6, the series of the cables 36A, 36B, 36C, 36D, 36E, and 36F allows transmission of all of the results of detection received from the motor rotation sensors 30A, 30B, 30C, 30D, 30E, and 30F to the robot controller 3.

Although FIGS. 6 and 7 show the examples in which the rotation sensors 40A, 40B, 40C, 40D, 40E, and 40F and the motor rotation sensors 30A, 30B, 30C, 30D, 30E, and 30F are divided into two communication systems, the way of division is not limited to this example. For example, at least any of the rotation sensors 40A, 40B, 40C, 40D, 40E, and 40F and at least any of the motor rotation sensors 30A, 30B, 30C, 30D, 30E, and 30F may be mixed together in one communication system. Alternatively, all of the rotation sensors 40A, 40B, 40C, 40D, 40E, and 40F and all of the motor rotation sensors 30A, 30B, 30C, 30D, 30E, and 30F may be organized in one communication system.

### [Summary]

The embodiment described above includes the following configuration:
(1) The robot 2 includes the first link and the second link that are coupled to each other through the joint axis Ax; the rotator 50 that is fixedly attached to the second link and rotates relative to the first link about the joint axis Ax; the rotation sensor 40 that is held by the holding member 70 and detects the rotation of the rotator 50; and the holding member 70 that is fixedly attached to the first link to hold the rotation sensor 40 and holds and allows the rotator 50 to rotate about the joint axis Ax.

Since the rotation sensor 40 is fixedly attached to the first link, it is possible to directly detect the rotation angle (joint angle) of the second link relative to the first link. Since the rotation sensor 40 is fixedly attached to the first link and the rotator 50 is fixedly attached to the second link, deformation or the like of the second link relative to the first link may cause a shift in the position of the rotator 50 relative to the rotation sensor 40. In the robot 2, the holding member 70 fixedly attached to the first link holds both of the rotation sensor 40 and the rotator 50. Thus, even if the second link becomes deformed relative to the first link, it is possible to reduce the occurrence of decentering or angular deviation of the rotator 50 relative to the rotation sensor 40. Accordingly, the robot is effective in improving the accuracy of rotation detection by the rotation sensor 40. even if there is deformation of the like of the second link relative to the first link, it is possible to reduce the occurrence of decentering or angular deviation of the rotator 50 relative to the rotation sensor 40. Thus, the robot is effective in improving the accuracy of rotation detection by the rotation sensor 40.

(2) The robot 2 according to (1) may also be such that the rotator 50 is a shaft that protrudes out from the second link toward the rotation sensor 40, and the holding member 70 holds the shaft via the bearing 71.

This allows the shaft to rotate more smoothly while being held.

(3) The robot according to (1) and (2) may further include the position adjuster PA that enables adjusting the position of the holding member 70 relative to the first link.

As described above, although the holding member 70 that holds both of the rotation sensor 40 and the rotator 50 helps reducing the occurrence of decentering or angular deviation of the rotator 50 relative to the rotation sensor 40, the position of the holding member 70 is restricted to the position of the rotator 50. Thus, when the rotator 50 is held by the mount member, a shift may occur in the position of the holding member 70 relative to the first link. The position adjuster PA enables easily accommodating this shift in position.

(4) The robot according to any one of (1) to (3) may further include the bridge member 90 that is a member separate from the holding member 70, is fixedly attached to the holding member 70 to extend in the direction away from the joint axis Ax, and is fixedly attached to the first link.

This improves the degree of flexibility in the arrangement of the holding member 70 while simplifying the structure of the holding member 70.

(5) The robot 2 according to (4) may further include the cable that is wired from the rotation sensor 40 to the first link and a cable guide 94 that guides the cable along the bridge member 90.

The use of the bridge member 90 helps stabilizing the wiring route of the cable up to the first link.

(6) The robot 2 according to (5) may also be such that the bridge member 90 includes the first surface 91a facing the second link and the second surface 91b that is a surface opposite to the first surface 91a, and the cable guide 94 guides the cable along the second surface 91b.

This allows the wiring route of the cable to be separated from the second link that works on the main body.

(7) The robot 2 according to any one of (4) to (6) may also be such that the bridge member 90 includes the first connection surface 96 and the second connection surface 97 that face the same side in the direction along the joint axis Ax, the first connection surface 96 being fixedly attached to the first link to have contact with the first link, and the second connection surface 97 being fixedly attached to the holding member 70 to have contact with the holding member 70.

Since the first connection surface 96 having contact with the first link and the second connection surface 97 fixedly attached to the holding member 70 face in the same direction, it is possible to improve the accuracy of the position of the second connection surface 97 relative to the first connection surface 96 and to improve the accuracy of positioning of the holding member 70 relative to the first link. Easy machining of the first connection surface 96 and the second connection surface 97 also contributes to a reduction in the processing cost of the bridge member 90.

(8) The robot 2 according to any one of (1) to (7) may also be such that the rotator 50 is a shaft that protrudes out from the second link toward the rotation sensor 40, and the rotation sensor 40 includes a sensor body 41 held by the holding member 70, a sensor shaft 42 that rotates relative to the sensor body 41 about the joint axis Ax, and a detector 45 that detects the rotation of the sensor shaft 42 relative to the sensor body 41. The robot 2 may further include the joint member 80 that couples the shaft to the sensor shaft 42.

Integrating the sensor body 41, the shaft, and the detector 45 into one unit simplifies the structure of the robot 2. Since the holding member 70 holds both of the sensor body 41 and the shaft, it is possible to reduce the occurrence of decentering or angular deviation of the shaft relative to the sensor shaft 42. This reduces mechanical load on the rotation sensor 40, which is integrated into one unit. In the case where the rotation sensor 40 is mounted on the holding member 70 after the rotator 50 is held by the holding member 70, the shaft can assemble easily with the sensor shaft 42 because the holding member 70 reduces the occurrence of decentering or angular deviation of the shaft.

(9) The robot 2 according to (8) may also be such that the holding member 70 includes the body holder 72 that holds the sensor body 41, and the shaft holder 73 that protrudes out from the body holder 72 and surrounds and holds the shaft about the joint axis Ax, and the joint member 80 couples the shaft to the sensor shaft 42 inside the shaft holder 73.

The bearing holder can also be used to protect the joint member 80.

(10) The robot 2 according to (9) may also be such that the outer periphery of the body holder 72 about the joint axis Ax and the inner and outer peripheries of the shaft holder 73 about the joint axis Ax form concentric circles.

Since the holding member 70 is shaped to allow tuning, it is possible to improve the accuracy of the position of the bearing holder relative to the body holder 72 and to further suppress a shift in the position of the shaft relative to the sensor shaft 42.

(11) The robot 2 according to any one of (8) to (10) may also be such that the joint member 80 is configured t couple the shaft held by the holding member 70 to the sensor shaft 42 while accommodating a shift in position between the shaft and the sensor shaft 42.

Since the holding member 70 suppresses a shift in the position of the shaft relative to the sensor shaft 42, the joint member 80 can easily accommodate the shift in the position of the shaft relative to the sensor shaft 42.

(12) The robot 2 according to any one of (1) to (11) may further include the motor fixedly attached to the first link, and the speed reducer 60 that transmits the rotation of the motor to the second link to rotate the second link relative to the first link about the joint axis Ax.

This enables detecting the rotation angle of the second link relative to the first link without being affected by deformation and backlash of the speed reducer 60.

(13) The robot 2 according to (12) may further include the motor rotation sensor 30 that is fixedly attached to the motor and detects the rotation of the motor for rotating the second link relative to the first link.

This allows various control using both of the motor rotation sensor 30 and the rotation sensor 40.

(14) The robot 2 according to (13) may also be such that the rotation sensor 40 and the motor rotation sensor 30 output the results of detection in a common data format.

This simplifies the structure of the controller that acquires information from the rotation sensor 40 and information from the motor rotation sensor 30.

(15) The robot 2 according to any one of (12) to (14) may also be such that the motor is connected to the first link from one side in the direction along the joint axis Ax, the second link is connected to the speed reducer 60 from the other side in the direction along the joint axis Ax, and the holding member 70 is mounted on the rotator 50 from the other side.

This allows the space where no motor is arranged to be used for the arrangement of the rotation sensor 40.

(16) The robot 2 according to (15) may further include the bridge member 90 that extends from the holding member 70 in the direction away from the joint axis Ax and is fixedly attached to the first link outward of the outer periphery of the second link about the joint axis Ax.

This allows the rotation sensor 40 to be easily arranged in the space where no motor is arranged.

(17) The robot 2 according to any one of (12) to (14) may also be such that the motor is connected to the first link from one side in the direction along the joint axis Ax at a position away from the joint axis Ax, the second link is connected to the speed reducer 60 from the other side in the direction along the joint axis Ax, the rotator 50 is a shaft that protrudes out from the second link toward the first link through the speed reducer 60, and the holding member 70 is mounted on the shaft from the one side and is fixedly attached to the first link.

This easily provides, in the first link, the space where the holding member 70 is fixedly attached.

(18) The robot 2 according to any one of (1) to (17) may further include the third link coupled to the second link through the second joint axis Ax, and the second rotation sensor 40 that detects the rotation of the third link relative to the second link, wherein the second rotation sensor 40 transmits the result of detection to the rotation sensor 40 via serial communication, and the rotation sensor 40 transmits the result of its own detection and the result of detection received from the second rotation sensor 40 via serial communication.

This reduces the number of communication cables and simplifies the structure of the robot 2.

While the embodiment has been described thus far, the present disclosure is not intended to be limited to the aforementioned embodiment, and various modifications can be made without departing from the scope of the present disclosure. For example, the rotation sensor 40 does not necessarily have to include the sensor shaft 42, and may be configured to detect the rotation of the rotator 50 without intervention of the sensor shaft 42. For example, the first end portion 51 may protrude out to the inside of the sensor body 41, and the code disk 44 may be fixedly attached to the outer periphery of the first end portion 51 inside the sensor body 41.

### [Reference Signs List]

- 2: robot
- 40: rotation sensor
- 50: rotator
- 70: holding member
- Ax: joint axis
- 60: speed reducer
- 41: sensor body
- 42: sensor shaft
- 45: detector
- 71: bearing
- 72: body holder
- 73: shaft holder
- 80: joint member
- PA: position adjuster
- 90: bridge member
- 94: cable guide
- 91a: first surface
- 91b: second surface
- 96: first connection surface
- 97: second connection surface

## Claims

1. A robot comprising:
a first link and a second link that are coupled to each other through a joint axis (Ax);
a rotator (50) that is fixedly attached to the second link and rotates relative to the first link about the joint axis (Ax);
a rotation sensor (40) that detects rotation of the rotator (50); and
a holding member (70) that is fixedly attached to the first link to hold the rotation sensor (40) and holds and allows the rotator (50) to rotate about the joint axis (Ax),
the robot further comprising:
a position adjuster (PA) that allows control of a position of the holding member (70) relative to the first link.

2. The robot according to claim 1, wherein
the rotator (50) is a shaft that protrudes out from the second link toward the rotation sensor (40), and
the holding member (70) holds the shaft via a bearing (71).

3. The robot according to any one of claims 1-2, further comprising:
a bridge member (90) that is a member separate from the holding member (70), is fixedly attached to the holding member (70) to extend in a direction away from the joint axis (Ax), and is fixedly attached to the first link.

4. The robot according to claim 3, further comprising:
a cable wired from the rotation sensor (40) to the first link; and
a cable guide (94) that guides the cable along the bridge member (90).

5. The robot according to any one of claims 3 and 4, wherein
the bridge member (90) includes a first surface (91a) and a second surface (91b), the first surface (91a) facing the second link, the second surface (91b) being a face opposite to the first surface (91a), and
the cable guide (94) guides the cable along the second surface (91b).

6. The robot according to any one of claims 3 to 5, wherein
the bridge member (90) includes a first connection surface (96) and a second connection surface (97) that face in the same direction along the joint axis (Ax),
the first connection surface (96) is fixedly attached to the first link in contact with the first link, and
the second connection surface (97) is fixedly attached to the holding member (70) in contact with the holding member (70).

7. The robot according to any one of claims 1-6, wherein
the rotator (50) is a shaft that protrudes out from the second link toward the rotation sensor (40), and
the rotation sensor (40) includes:
a sensor body (41) held by the holding member (70);
a sensor shaft (42) that rotates relative to the sensor body (41) about the j oint axis (Ax); and
a detector (45) that detects rotation of the sensor shaft (42) relative to the sensor body (41),
the robot further comprising:
a joint member (80) that couples the shaft to the sensor shaft (42).

8. The robot according to any one of claims 1-7, wherein
the holding member (70) includes:
a body holder (72) that holds the sensor body (41); and
a shaft holder (73) that protrudes out from the body holder (72) and surrounds and holds the shaft about the joint axis (Ax), and
the joint member (80) couples the shaft to the sensor shaft (42) within the shaft holder (73).

9. The robot according to any one of claims 1 to 8, wherein
the joint member (80) is configured to couple the shaft to the sensor shaft (42) while accommodating a shift in position between the shaft held by the holding member (70) and the sensor shaft (42).

10. The robot according to any one of claims 1-9, further comprising:
a motor fixedly attached to the first link; and
a speed reducer (60) that transmits rotation of the motor to the second link to rotate the second link relative to the first link about the joint axis (Ax).

11. The robot according to any one of claims 1-10, further comprising:
a motor rotation sensor that is fixedly attached to the motor and detects rotation of the motor for rotating the second link relative to the first link;
[wherein
the rotation sensor (40) and the motor rotation sensor output a result of detection in a common data format.

12. The robot according to any one of claims 10 to 11, wherein
the motor is connected to the first link from one side in a direction along the joint axis (Ax),
the second link is connected to the speed reducer (60) from the other side in the direction along the joint axis (Ax), and
the holding member (70) is mounted on the rotator (50) from the other side.

13. The robot according to claim 12, further comprising:
a bridge member (90) that extends from the holding member (70) in a direction away from the joint axis (Ax) and is fixedly attached to the first link outward of an outer periphery of the first link about the joint axis (Ax)

14. The robot according to any one of claims 10-13, wherein
the motor is connected to the first link from one side in a direction along the joint axis (Ax) at a position away from the joint axis (Ax),
the second link is connected to the speed reducer (60) from the other side in the direction along the joint axis (Ax),
the rotator (50) is a shaft that protrudes out from the second link toward the first link through the speed reducer (60), and
the holding member (70) is mounted on the shaft from the one side and is fixedly attached to the first link.

15. The robot according to any one of claims 1-14, further comprising:
a third link coupled to the second link by a second joint axis (Ax); and
a second rotation sensor that detects rotation of the third link relative to the second link,
wherein the second rotation sensor transmits a result of detection to the rotation sensor via serial communication, and
the rotation sensor (40) transmits a result of its own detection and the result of detection received from the second rotation sensor via serial communication.
